# NEUE EUROPÄISCHE PATENTSCHRIFT

(11) **EP 0 241 705 B2**
(45) Veröffentlichungstag und Bekanntmachung des Hinweises auf die Entscheidung über den Einspruch: **05.04.1995**
(45) Hinweis auf die Patenterteilung: 16.10.1991
(21) Anmeldenummer: 87103479.9
(22) Anmeldetag: 11.03.1987
(51) Int. Cl.: F02P 5/15, F02P 5/04

(54) **Kodiervorrichtung für Ottomotoren von Kraftfahrzeugen**
Coding device for motor vehicle internal-combustion engines
Dispositif de codage pour moteurs à combustion interne de véhicules

(30) Priorität: 22.03.1986 DE 3609850
(43) Veröffentlichungstag der Anmeldung: 21.10.1987
(73) Patentinhaber: Adam Opel Aktiengesellschaft, 65428 Rüsselsheim (DE)
(72) Erfinder: Oberhaus, Herbert, Dipl.-Ing., D-6090 Rüsselsheim (DE)
(74) Vertreter: Bergerin, Ralf, Dipl.-Ing.

(56) Entgegenhaltungen:
- DE-A- 3 112 601
- FR-A- 845 478
- GB-A- 2 109 859
- GB-A- 2 156 905
- US-A- 3 659 574
- US-A- 4 013 050
- US-A- 4 399 780
- Bosch Technische Unterrichtung 1983,Seite 31
- "Einführungsschrift für den Kundendienst der Daimler-Benz AG,Typ 201.034 (190E 2.3-16)"

## Beschreibung

Die Erfindung bezieht sich auf eine Kodiervorrichtung für Ottomotoren von Kraftfahrzeugen, die mehrere, jeweils auf eine bestimmte Kraftstoffart (Oktanzahl) abgestimmte Zündkennfelder aufweisen. wobei die Kodiervorrichtung zur Aktivierung des dem jeweils verwendeten Kraftstoff zugeordneten Zündkennfeldes dient, mit einem durch eine einen Teilstromkreis bildende Kabelschleife mit einem Zündsteuergerät verbundenen Steckergehäuse unt mit einem mit diesem zusammenwirkenden, die elektrische Verbindung zu dem Zündsteuergerät herstellenden Stecker.

Kodiervorrichtungen der vorgenannten Art kommen in Personenkraftfahrzeugen zum Einsatz, die eine elektronische Zündsteuerung besitzen. Da die ausreichende Versorgung mit bleifreien Kraftstoffen noch nicht gesichert ist und insbesondere bei Auslandfahrten stets mit Kraftstoffen recht unterschiedlicher Oktanzahlen gerechnet werden muß, sind Personenkraftfahrzeuge serienmäßig mit einer multifunktionalen Gemischaufbereitungs- und Zündanlage ausgerüstet. Sie können daher mit überall erhältlichem verbleiten Superbenzin betrieben werden, sind aber auch für andere Kraftstoffe geeignet und zugleich für den problemlosen späteren Einbau eines Katalysators zur weiteren Reduzierung der Schadstoffemission vorbereitet.

Eine aus "Betriebsanleitung Daimler-Benz, Typ 200; 230 E; 260 E; 300 E; 7 KD/9/95, 40.K., Seiten 69, 70" bzw. "Einführungsschrift für den Kundendienst der Daimler-Benz AG, Typ 201.034 (190 E 2,3-16)" bekannte Kodiervorrichtung der eingangs bezeichneten Art ist mit einem verdrehbaren Kodierstecker, der gelöst, verstellt und wiederaufgeseht werden kann, ausgerüstet, um die Zündeinstellung des Motors mit Hilfe einer Reihe verschiedener Zündkennfelder auf den jeweils zur Verfügung stehenden Kraftstoff einzustellen bzw. umzuschalten.

Der Kodierstecker weist sieben verrastete Positionen auf, durch die sechs verschiedene Zündkennfelder aktiviert werden können. Im Stecker sind sechs unterschiedliche, jeweils einem Teilstromkreis mit Steckkontakten zugeordnete elektrische Widerstände sowie Rastmittel bzw. gegenrastmittel für sieben definierte Steckepositionen auf dem Steckergehäuse vorgesehen.

Eine derartige multifunktionale Gemischaufbereitungs- und Zündanlage sowie der zur Aktiverung derselben eingesetzten mehrstufige Kodierstecker ist aufwendig, kompliziert und verursachen hohe Kosten, die einer Großserienfertigung preiswerter Fahrzeuge abträglich sind.

Aufgabe der vorliegenden Erfindung ist es, ein Zündsystem zu schaffen, welches sich durch einen vertretbaren technischen Aufwand und entsprechend niedrige Kosten auszeichnet. Die Erfindung geht hierbei von der Überlegung aus, daß eine derart hohe Zahl von verschiedenen Zündeinstellungen, wie sie bei dem oben angegebenen Stand der Technik vorgesehen ist, in der Praxis nur selten oder nie benötigt wird, Außerdem besteht bei dem bekannten Drehschalter mit den vielen Einstellungsmöglichkeiten die Gefahr, daß vom Fahrzeugbenutzer nicht in jedem Fall die richtige Einstellung gewählt wird und der Motor daraufhin Schaden erleiden könnte.

Die vorliegende Erfindung löst die gestellte Aufgabe bei einer Kodiervorrichtung der eingangs bezeichneten Art und vermeidet die geschilderten Nachteile durch die Merkmale des Kennzeichnenden Teils des Patentanspruchs 1. Die erfindungsgemäße Kodiervorrichtung beschränkt sich also auf lediglich zwei mögliche Einstellungen, die durch einfaches Umstecken des Steckers ohne nennenswerte Gefahr von Irrtümern von dem Fahrzeugbenutzer realisiert werden können. Wenn es sich bei dem betreffenden Fahrzeug um einen mit Katalysator ausgerüsteten oder mit Katalysator nachrüstbaren Motor handelt, so sollte die eine (normale) Zündeinstellung für bleifreies Superbenzin ausgelegt und durch die Oktanzahl 95 gekennzeichnet sein. Die zweite Zündeinstellung, die erfindungsgemäß durch einfaches Umstecken des Steckers aktiviert werden kann, sollte dagegen auf die Verwendung bleifreien bzw. verbleiten Normalkraftstoffs, also die Oktanzahl 91, abgestellt sein.

Für den Fall, daß es sich bei dem Fahrzeug um eine sog. Rückrüst-Version handelt, kann die erste Zündeinstellung auf verbleiten Superkraftstoff mit der Oktanzahl 98 und die zweite, durch Umstecken des erfindunsgemäßen Steckers realisierbare Zündeinstellung auf unverbleiten Superkraftstoff entsprechender Oktanzahl 95 ausgelegt sein.

Es empfiehlt sich, die produktionsseitige Einstellung der Zündanlage so vorzunehmen, daß sie der jeweils höchstmöglichen Oktanzahl des zu verwendenden Kraftstoffes entspricht.

Weitere Einzelheiten und Vorteile der Erfindung können den Unteransprüchen sowie - anhand von Ausführungsbeispielen -der Zeichnung und der nachstehenden Beschreibung dieser Ausführungsbeispiele entnommen werden. Es zeigen:
- Fig. 1: eine Kodiervorrichtung nach der Erfindung in schematischer Darstellung,
- Fig. 2: eine Ausführungsform eines Steckers für die erfindungsgemäße Kodiervorrichtung, teilweise in Draufsicht, teilweise im horizontalen Längsschnitt (Schnitt II - II in Fig. 3),
- Fig. 3: den Gegenstand von Fig. 2 in Vorderansicht und
- Fig. 4: den Gegenstand von Fig. 2 und 3 in Seitenansicht.

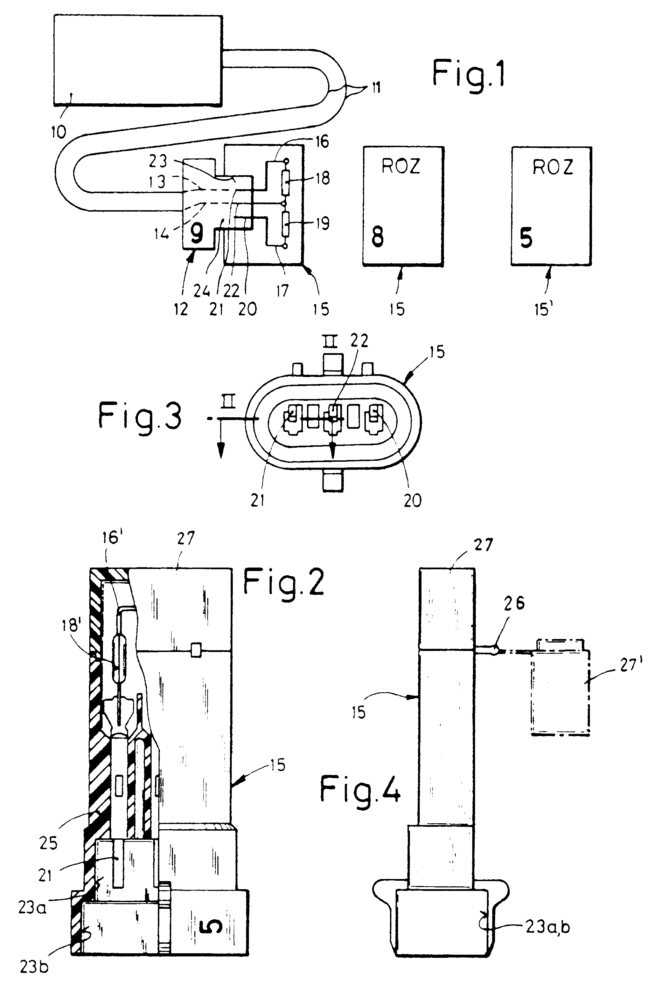

In Fig. 1 bezeichnet 10 ein schematisch in Kastenform angedeutetes Zündsteuergerät für einen Ottomotor, z. B. eines Kraftfahrzeuges. Das Zündsteuergerät 10 ist über eine Kabelschleife 11 mit einem Steckergehäuse 12 verbunden. Zündsteuergerät 10 und Kabelschleife 11 bilden einen offenen Teilstromkreis, dessen offene Kontaktstellen - in Fig. 1 mit 13 bzw. 14 beziffert -innerhalb des Steckergehäuses 12 liegen. Die Kontaktstellen 13, 14 können z. B. als Steckbuchsen ausgestaltet sein. Um den Teilstromkreis zu schließen, ist es erforderlich, die beiden Kontaktstellen 13, 14 durch einen weiteren Teilstromkreis zu überbrücken. Zu diesem Zweck ist ein insgesamt mit 15 bezeichneter Stecker vorgesehen, in dessen Innerem ein erster Teilstromkreis 16 und ein zweiter Teilstromkreis 17 angeordnet ist. Jeder Teilstromkreis - 16 bzw. 17 - ist durch einen elektrischen Widerstand - 18 bzw. 19 - charakterisiert. Die Teilstromkreise 16, 17 sind im Stecker 15 in Parallelschaltung angeordnet. Sie bilden insgesamt drei Anschlüsse 20, 21 und 22, die in eine Aussparung 23 des Steckerkörpers ausmünden und z. B. als Steckkontakte ausgebildet sein können. Wie aus Fig. 1 erkennbar ist, besitzt jeder der Teilstromkreise 16, 17 einen separaten, nur dem jeweiligen Teilstromkreis zugeordneten Anschluß 20 bzw. 21. Darüber hinaus besitzen die beiden Teilstromkreise 16, 17 einen ihnen beiden gemeinsamen Anschluß 22. Damit sind dem ersten Teilstromkreis 16 die elektrischen Anschlüsse 21, 22 und dem zweiten Teilstromkreis 17 die elektrischen Anschlüsse 20, 22 zugeordnet.

Bei dem aus Fig. 1 ersichtlichen Ausführungsbeispiel ist der Stecker 15 auf das Steckergehäuse 12 aufgesteckt, wobei das Steckergehäuse 12 mit einem Vorsprung 24 in die Aussparung 23 des Steckerkörpers eingreift. Bei der gezeigten Position stehen die Anschlüsse 13, 14 des Steckergehäuses 12 mit den Gegenanschlüssen 21, 22 des Steckers 15 in elektrischem Kontakt. Damit ist der Teilstromkreis von Zündsteuergerät 10 und Kabelschleife 11 durch den ersten Teilstromkreis 16 des Steckers 15 geschlossen. Die hierdurch am Zündsteuergerät 10 realisierte Zündeinstellung ist damit durch den ersten Stecker-Teilstromkreis 16 bzw. durch dessen Widerstand 18 bestimmt. Es handelt sich hierbei um eine von zwei möglichen Stellungen des Steckers 15 gegenüber dem Stekkergehäuse 12. Die zweite Steckerposition läßt sich durch einfaches Umstecken des Steckers 15 um 180° bewerkstelligen. In diesem Fall würden sich dann die elektrischen Anschlüsse 13, 14 des Stekkergehäuses 12 mit den beiden anderen Gegenanschlüssen - 20, 22 - des Steckers 15 in elektrischen Kontakt befinden. In diesem Fall würde die Zündeinstellung am Zündsteuergerät 10 durch den zweiten Teilstromkreis 17 bzw. den zweiten Widerstand 19 des Steckers 15 bestimmt.

Die aus Fig. 1 ersichtliche erste Steckerposition sollte einer Zündeinstellung auf größtmögliche Oktanzahl des zu verwendenden Kraftstoffes entsprechen. Dies könnte z. B. verbleites Superbenzin mit einer Oktanzahl von "98" sein. Wie Fig. 1 verdeutlicht, kann diese Oktanzahl an der Außenseite des Steckers 15 durch die Zahl 8 markiert werden, die in der betreffenden Steckerposition dann - zusammen mit der auf dem Steckergehäuse markierten Zahl 9 - die für den zu verwendenden Kraftstoff maßgebende Oktanzahl "98" ergibt. Auf der anderern Seite des Stekkerkörpers - vgl. Darstellung 15' in Fig. 1 - kann eine weitere Markierung (die Zahl 5) vorgesehen sein, die bei der zweiten Steckerposition - zusammen mit der auf dem Steckergehäuse 12 markierten Zahl 9- wiederum eine Oktanzahl ergibt. Dies ist im vorliegenden Fall die Oktanzahl "95". Hierdurch wird dem Fahrzeugbenutzer angezeigt, daß er bei der zweiten Steckerposition einen Kraftstoff mit der (vergleichsweise niedrigen) Oktanzahl von "95", z. B. unverbleites Superbenzin, verwenden kann.

Aus Fig. 2 - 4 geht nun eine Ausführungsform für eine praktische Ausgestaltung eines in Fig. 1 nur schematisch angedeuteten und mit 15 bezeichneten Steckers hervor. Der Stecker 15 besitzt einen Steckerkörper 25, der z. B. als Kunststoff-Spritzteil hergestellt sein kann. Die drei anläßlich der Beschreibung von Fig. 1 bereits erwähnten elektrischen Anschlüsse 20, 21 und 22 sind insbesondere aus Fig. 3 erkennbar. Sie sind, wie Fig. 2 erkennen läßt, als Steckkontakte ausgebildet. Die Steckkontakte 20, 21 und 22 ragen in eine abgestufte Aussparung 23a, 23b am vorderen Ende des Steckers 15 hinein, wo sie mit den entsprechenden Gegenkontakten 13, 14 (Fig. 1) des in Fig. 2 - 4 nicht gezeigten Steckergehäuses 12 in elektrischen Kontakt kommen können. Der Steckerkörper trägt in Abwandlung der in Fig. 1 angegebenen Oktanzahlkombinationen auf der Vorderseite die Zahl 5 und auf der Rückseite (nicht dargestellt) die Zahl 1. Dies entspricht im Zusammenwirken mit der auf dem Steckergehäuse markierten Zahl 9 jeweils einer Steckerposition zur Aktivierung des der Oktanzahl "95" bzw. "91" zugeordneten Zündkennfeldes am Zündsteuergerät bei Betankung des Fahrzeuges mit bleifreiem Superbenzin oder verbleitem oder unverbleitem Normalbenzin.

Eine an den Steckerkörper bei 26 mitangespritzte oder ultraschall-angeschweißte Abdeckkappe 27' dient als Abdeckung 27 der Montageöffnung des Steckerkörpers nach dem Einbau der Steckkontakte und der Widerstandsbrücken (16', 18' bzw. 17', 19', nicht sichtbar).

## Patentansprüche

1. Kodiervorrichtung für Ottomotoren von Kraftfahrzeugen, die mehrere, jeweils auf eine bestimmte Kraftstoffart (Oktanzahl) abgestimmte Zündkennfelder aufweisen, wobei die Kodiervorrichtung zur Aktivierung des dem jeweils verwendeten Kraftstoff zugeordneten Zündkennfeldes dient, mit einem durch eine einen Teilstromkreis bildende Kabelschleife (11) mit einem Zündsteuergerät (10) verbundenen Steckergehäuse (13) und mit einem mit diesem zusammenwirkenden, die elektrische Verbindung zu dem Zündsteuergerät (10) herstellenden Stecker (15), dadurch gekennzeichnet, daß im Stecker (15) zwei unterschiedliche, jeweils einem Teilstromkreis (16 bzw. 17) mit Steckkontakten (20, 22 bzw. 21, 22) zugeordnete elektrische Widerstände (18, 19) angeordnet sind, wobei ein erster Teilstromkreis (16) mit einem ersten Widerstand (18) zur Aktivierung eines ersten Zündkennfeldes und ein Zweiter Teilstromkreis (17) mit einem zweiten Widerstand (19) zur Aktivierung eines zweiten Zündkennfeldes dient, und daß am Steckergehäuse (12) einerseits und am Stecker (15) andererseits Rastmittel (24) in Form eines Vorsprungs bzw. Gegenrastmittels (23) in Form einer Aussparung, welche zwei gegenüberliegende, parallele, gerade und zwei gegenüberliegende, entgegengesetzt gekrümmte, halbkreisförmige die Steckkontakte (20, 21, 22) umgebenden Berandungen aufweist und in die der Vorsprung eingreift, für nur zwei sich um 180° unterscheidende, definierte Steckerpositionen auf dem Steckergehäuse (12) vorgesehen sind, derart, daß der am Steckergehäuse (12) offene (13, 14) Teilstromkreis der Kabelschleife (11) in einer ersten Steckerposition durch den ersten Teilstromkreis (16) des Steckers (15) und in einer zweiten Steckerposition durch den zweiten Teilstromkreis (17) des Steckers (15) schließbar ist, wobei die Steckkontakte (20, 21, 22) auf einer zu den geraden Berandungen parallelen Geraden liegen.

2. Kodiervorrichtung nach Anspruch 1,
dadurch gekennzeichnet, daß die beiden Teilstromkreise (16, 17) bzw. elektrischen Widerstände (18, 19) im Stecker (15) in Parallelschaltung angeordnet sind, derart, daß die Teilstromkreise (16, 17) je einen separaten (20 bzw. 21) und einen beiden gemeinsamen Steckkontakt (22) zum Anschluß des Steckers (15) an entsprechend zugeordnete Steckbuchsen (13, 14) des Steckergehäuses (12) aufweisen.

3. Kodiervorrichtung nach Anspruch 1 oder 2,
dadurch gekennzeichnet, daß das erste Zündkennfeld und demgemäß auch der erste Teilstromkreis (16) des Steckers (15) für Betrieb des Motors mit unverbleitem Superkraftstoff und das zweite Zündkennfeld und entsprechend auch der zweite Teilstromkreis (17) des Steckers (15) für Betrieb mit verbleitem oder unverbleitem Normalkraftstoff ausgelegt ist.

4. Kodiervorrichtung nach Anspruch 1 oder 2,
dadurch gekennzeichnet, daß das erste Zündkennfeld und demgemäß auch der erste Teilstromkreis (16) des Steckers (15) für Betrieb des Motors mit verbleitem Superkraftstoff und das zweite Zündkennfeld und entsprechend auch der zweite Teilstromkreis (17) des Stekkers (15) für Betrieb mit unverbleitem Superkraftstoff ausgelegt ist.

## Claims

1. Coding device for Otto engines of motor vehicles which have several ignition characteristics each matched to a certain type of fuel (octane rating), wherein the coding device serves to activate the ignition characteristic associated with the particular fuel being used, with a plug housing (13) connected to an ignition control device (10) by a cable loop (11) forming a partial circuit and with a plug (15) cooperating with the plug housing (13) and making the electrical connection to the ignition control device (10), **characterised** in that in the plug (15) are disposed two different electrical resistors (18, 19) each associated with a partial circuit (16 and 17) with plug contacts (20, 22 and 21, 22), wherein a first partial circuit (16) with a first resistor (18) serves to activate a first ignition characteristic and a second partial circuit (17) with a second resistor (19) serves to activate a second ignition characteristic, and that on the plug housing (12) on the one hand and on the plug (15) on the other hand are provided latching means (24) in the form of a projection or counter-latching means (23) in the form of a recess which has two oppositely arranged, parallel, straight boundaries surrounding the plug contacts (20, 21, 22) and two oppositely arranged, semi-circular boundaries curved in the opposite direction surrounding the plug contacts (20, 21, 22) and in which engages the projection for only two specific plug positions, differing by 180 degrees, on the plug housing (12), such that the partial circuit of the cable loop (11) which is open (13, 14) at the plug housing (12) can be closed in a first plug position by the first partial circuit (16) of the plug (15) and in a second plug position by the second partial circuit (17) of the plug (15), wherein the plug contacts (20, 21, 22) lie in a straight line parallel to the straight boundaries.

2. Coding device according to claim 1, characterised in that the two partial circuits (16, 17) and electrical resistors (18, 19) are connected in parallel in the plug (15), such that the partial circuits (16, 17) each comprise one separate plug contact (20 and 21) and one plug contact (22) common to both for connection of the plug (15) to correspondingly associated bushes (13, 14) of the plug housing (12).

3. Coding device according to claim 1 or 2, characterised in that the first ignition characteristic and accordingly also the first partial circuit (16) of the plug (15) is designed for running the engine on unleaded high-grade fuel and the second ignition characteristic and accordingly also the second partial circuit (17) of the plug (15) is designed for running on leaded or unleaded ordinary fuel.

4. Coding device according to claim 1 or 2, characterised in that the first ignition characteristic and accordingly also the first partial circuit (16) of the plug (15) is designed for running the engine on leaded high-grade fuel and the second ignition characteristic and accordingly also the second partial circuit (17) of the plug (15) is designed for running on unleaded high-grade fuel.

## Revendications

1. Dispositif de codage pour moteurs à allumage commandé de véhicules automobiles, présentant plusieurs champs caractéristiques d'allumage adaptés chacun à un type de carburant déterminé (indice d'octane), ce dispositif de codage servant à l'activation du champ caractéristique d'allumage affecté au carburant utilisé dans chaque cas, et comportant une boucle de câble (11) formant un circuit de courant partiel, un boîtier de connecteur (12) relié à un appareil de commande d'allumage (10) et, coopérant avec ce boîtier, un connecteur mâle (15) réalisant la connexion électrique à l'appareil de commande d'allumage (10), caractérisé par le fait que deux résistances électriques (18, 19) différentes, affectées chacune à un circuit de courant partiel (16, 17) à à contacts enfichables (20, 22, respectivement 21, 22), sont agencées dans le connecteur mâle (15), un premier circuit de courant partiel (16) avec une première résistance (18) servant à l'activation d'un premier champ caractéristique d'allumage et un deuxième circuit de courant partiel (17) avec une deuxième résistance (19) servant à l'activation d'un deuxième champ caractéristique d'allumage, et par le fait qu'il est prévu, sur le boîtier de connecteur (12) d'une part et sur le connecteur mâle (15) d'autre part, des moyens d'enclenchement (24) en forme de saillie et des moyens d'enclenchement conjugués (23) en forme d'évidement qui comporte deux bords en vis-à-vis rectilignes parallèles et deux bords en vis-à-vis courbés en demi-cercle entourant les contacts (20, 21, 22) enfichables pour seulement deux positions définies décalées de 180° du connecteur mâle sur le boîtier de connecteur (12), de manière telle que le circuit de courant partiel (13, 14) de la boucle de câble (11) ouvert au niveau du boîtier de connecteur (12) puisse être fermé par le premier circuit de courant partiel (16) du connecteur mâle (15) dans une première position dudit connecteur mâle et par le deuxième circuit de courant partiel (17) du connecteur mâle (15) dans une deuxième position dudit connecteur mâle.

2. Dispositif de codage selon revendication 1, caractérisé par le fait que les deux circuits de courant partiels (16, 17), ou encore les résistances électriques (18, 19), sont montés en parallèle dans le connecteur mâle (15), de manière que les circuits de courants partiels (16, 17) présentent chacun un contact enfichable séparé (20, 21) et un contact enfichable commun (22) pour la connexion du connecteur mâle (15) à des douilles de connexion (13, 14) correspondantes du boîtier de connecteur (12).

3. Dispositif de codage selon revendication 1 ou 2, caractérisé par le fait que le premier champ caractéristique d'allumage et le premier circuit de courant partiel (16) du connecteur mâle (15) sont conçus pour le fonctionnement du moteur avec du carburant super sans plomb et le deuxième champ caractéristique d'allumage et le deuxième circuit de courant partiel (17) du connecteur mâle (15) sont conçus pour le fonctionnement avec du carburant normal sans plomb ou avec du plomb.

4. Dispositif de codage selon revendication 1 ou 2, caractérisé par le fait que le premier champ caractéristique d'allumage et le premier circuit de courant partiel (16) du connecteur mâle (15) sont conçus pour le fonctionnement du moteur avec du carburant super avec du plomb, et le deuxième champ caractéristique d'allumage et le deuxième circuit de courant partiel (17) du connecteur mâle (15) sont conçus pour le fonctionnement avec du carburant super sans plomb.
